# EUROPEAN PATENT APPLICATION

(11) **EP 4 521 547 A1**
(43) Date of publication of application: **12.03.2025**
(21) Application number: 24196910.4
(22) Date of filing: 28.08.2024
(51) Int. Cl.: H01Q 1/12, H01Q 3/06, H01Q 3/08

(54) **ANTENNA MOUNT AND RELATED ANTENNA ASSEMBLIES**

(30) Priority: 05.09.2023 US 202363580625 P
(71) Applicant: Outdoor Wireless Networks LLC, North Carolina 28610 (US)
(72) Inventor: LEWRY, Matthew Robert, Limekilns (GB)
(74) Representative: Meissner Bolte Partnerschaft mbB

(57) **Abstract**

The present disclosure describes an antenna mount. The antenna mount includes a clamp section including one or more clamping members, the one or more clamping members configured to engage a mounting structure, at least one adjustable plate pivotably coupled to at least one of the one or more clamping members, and an azimuth adjustment mechanism coupled to the at least one of the clamping members and the at least one adjustable plate. Through rotation of the azimuth adjustment mechanism, the at least one adjustable plate is configured to linearly move relative to the one or more clamping members to adjust an azimuth alignment of an antenna coupled thereto. Related antenna assemblies are also described herein.

## Description

### Related Application(s)

The present application claims priority to and the benefit of U.S. Provisional Patent Application Serial No. 63/580,625, filed September 5, 2023, the disclosures of which are hereby incorporated by reference in their entirety.

### Field

The present application is directed generally toward telecommunications equipment, and more particularly, to an antenna mount for a point-to-point antenna, and related antenna assemblies.

### Background

Many point-to-point backhaul communication links utilize traditional dish antennas consisting of a parabolic reflector and a single antenna element that illuminates the reflector. Advantageously, these dish antennas are relatively simple in design and can achieve relatively large antenna gain. Nonetheless, these antennas can exhibit some disadvantages. For example, the transmit power may be limited by the available output power of an amplifier, which can mean that costly semiconductor technologies may have to be used and/or parabolic reflector size may have to be increased to obtain sufficiently large effective isotropic radiated power (EIRP) levels. However, large reflector sizes typically yield narrower beamwidths, which can lead to static alignment difficulties during installation and dynamic alignment difficulties during adverse weather conditions, and lower net data rates. This is because the beam width is so fine that it become nearly impossible to reliably point/align and continuously hold the antenna beam on a required target in order to maintain adequate system gain. For example, at 80Ghz, the beamwidth for the antenna is very small *(e.g.,* 0.5 degrees) which can make initial alignment of antennas difficult during installation. In addition, current adjustments are made with bolts and small changes in adjustment can result in large angular shifts. Even locking off hardware can result in minor changes in adjustment. Thus, there may be a need for an antenna mount that allows for small alignment adjustments (*e.g*., with respect to azimuth) as well as allows for easy installation.

### Summary

A first aspect of the present invention is directed to an antenna mount. The antenna mount includes a clamp section including one or more clamping members, the one or more clamping members configured to engage a mounting structure, at least one adjustable plate pivotably coupled to at least one of the clamping members, and an azimuth adjustment mechanism coupled to at least one of the one or more clamping members and the at least one adjustable plate. Through rotation of the azimuth adjustment mechanism, the at least one adjustable plate is configured to linearly move relative to the one or more clamping members to adjust an azimuth alignment of an antenna coupled thereto.

A second aspect of the present invention is directed to an antenna mount. The antenna mount includes a clamp section including a pair of clamping members, the clamping members configured to engage a mounting structure, a pair of adjustable plates pivotably coupled to one of the clamping members, and an azimuth adjustment mechanism coupled to one of the clamping members and the pair of adjustable plates. The azimuth adjustment mechanism includes a first threaded section coupled to a second threaded section, the first threaded section having a right-hand thread and the second threaded section having a left hand thread, a first boss member coupled to the clamping member, and a second boss member coupled to the pair of adjustable plates. The first threaded section extends through an aperture in the first boss member and the second threaded section extends through an aperture in the second boss member. The azimuth adjustment mechanism is configured such that as the first or second threaded section is rotated, the first and second boss members move toward each other or away from each other which cause the pair of adjustable plates to linearly move relative to the clamping member to adjust an azimuth alignment of an antenna coupled thereto.

A third aspect of the present invention is directed to an antenna mount assembly. The antenna mount assembly includes a mounting structure, an antenna having a main reflector, and an antenna mount configured to secure the antenna to the mounting structure. The antenna mount includes a clamp section including a pair of clamping members, the clamping members configured to engage a mounting structure, a pair of adjustable plates pivotably coupled to one of the clamping members, and an azimuth adjustment mechanism coupled to one of the clamping members and the pair of adjustable plates. Through rotation of the azimuth adjustment mechanism, the pair of adjustable plates are configured to linearly move relative to the clamping member to adjust an azimuth alignment of the antenna.

It is noted that aspects of the invention described with respect to one embodiment, may be incorporated in a different embodiment although not specifically described relative thereto. That is, all embodiments and/or features of any embodiment can be combined in any way and/or combination. Applicant reserves the right to change any originally filed claim and/or file any new claim, accordingly, including the right to be able to amend any originally filed claim to depend from and/or incorporate any feature of any other claim or claims although not originally claimed in that manner. These and other objects and/or aspects of the present invention are explained in detail in the specification set forth below. Further features, advantages and details of the present invention will be appreciated by those of ordinary skill in the art from a reading of the figures and the detailed description of the preferred embodiments that follow, such description being merely illustrative of the present invention.

### Brief Description of the Figures

**FIG. 1** is a rear perspective view of an antenna assembly according to embodiments of the present invention.
**FIG. 2** is an antenna mount according to embodiments of the present invention utilized in the antenna assembly of **FIG. 1****.**
**FIG. 3** is an enlarged side view the antenna mount of **FIG. 2** and the azimuth adjustment mechanism according to embodiments of the present invention.
**FIG. 4A** is a top perspective view of the antenna mount of **FIG. 2** illustrating the azimuth adjustment mechanism fully retracted according to embodiments of the present invention.
**FIG. 4B** is a top perspective view of the antenna mount of **FIG. 2** illustrating the azimuth adjustment mechanism fully extended according to embodiments of the present invention.
**FIG. 5A** is a top view of the antenna assembly of **FIG. 1** with the azimuth adjustment mechanism of the antenna mount fully retracted as shown in **FIG. 4A** according to embodiments of the present invention.
**FIG. 5B** is a top view of the antenna assembly of **FIG. 1** with the azimuth adjustment mechanism of the antenna mount fully extended as shown in **FIG. 4B** according to embodiments of the present invention.
**FIG. 6** is a top view of an alternative configuration of the antenna mount of **FIG. 2** configured to secure an antenna to a smaller diameter mounting pole according to embodiments of the present invention.
**FIG. 7A** is a front perspective view of the antenna mount of **FIG. 2****.**
**FIG. 7B** is a cross-sectional view of an exemplary elevation adjuster of the antenna mount of **FIG. 2** according to embodiments of the present invention.
**FIG. 8A** is a top view of the antenna assembly of **FIG. 1** with the elevation adjuster of the antenna mount fully retracted according to embodiments of the present invention.
**FIG. 8B** is a top view of the antenna assembly of **FIG. 1** with the elevation adjuster of the antenna mount fully extended according to embodiments of the present invention.

### Detailed Description

The present invention now is described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

The present invention now will be described more fully hereinafter with reference to the accompanying drawings, in which illustrative embodiments of the invention are shown. Like numbers refer to like elements throughout and different embodiments of like elements can be designated using a different number of superscript indicator apostrophes (*e.g.*, **10', 10", 10‴**).

In the figures, certain layers, components or features may be exaggerated for clarity, and broken lines illustrate optional features or operations unless specified otherwise. This invention may, however, be embodied in many different forms and should not be construed as limited to the embodiments set forth herein; rather, these embodiments are provided so that this disclosure will be thorough and complete, and will fully convey the scope of the invention to those skilled in the art.

It will be understood that, although the terms first, second, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention. The sequence of operations (or steps) is not limited to the order presented in the claims or figures unless specifically indicated otherwise.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein. Well-known functions or constructions may not be described in detail for brevity and/or clarity.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

As used herein, phrases such as "between X and Y" and "between about X and Y" should be interpreted to include X and Y. As used herein, phrases such as "between about X and Y" mean "between about X and about Y." As used herein, phrases such as "from about X to Y" mean "from about X to about Y."

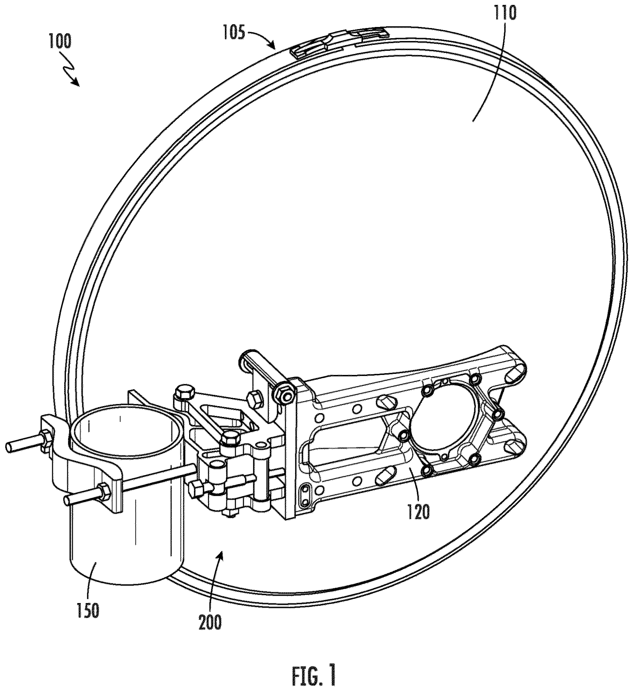

Pursuant to embodiments of the present invention, an antenna mount and related antenna assemblies are provided. The antenna mount of the present invention allows for finer resolution in azimuth adjustment of an antenna and provides higher stability than antenna mounts that are currently available in the market. In some embodiments, the antenna mount of the present invention may also allow for elevation adjustment. Embodiments of the present invention will now be discussed in greater detail with reference to **FIGS. 1-8B****.**

Referring now to **FIG. 1****,** an antenna assembly according to embodiments of the present invention, designated broadly at **100,** is illustrated. As shown in **FIG. 1****,** the antenna assembly **100** includes an antenna **105** having a main reflector **110** and an antenna mount **200.** The main reflector **110** of the antenna **105** is coupled to the antenna mount **200** via a reflector mount **120.** In some embodiments, the main reflector **110** has a parabolic shape. In some embodiments, the antenna assembly **100** may be used with a point-to-point antenna. For example, in some embodiments, the antenna assembly **100** may be used with a millimeter wave (mmWave) antenna. According to embodiments of the present invention, the antenna mount **200** is configured to secure the antenna assembly **100** to a mounting structure **150** (*e.g.,* a pole or pipe).

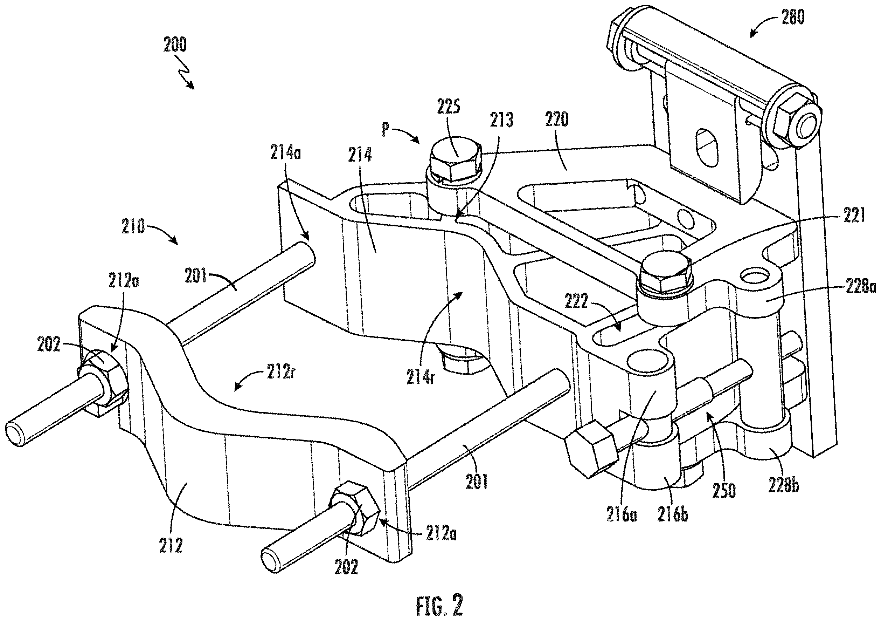

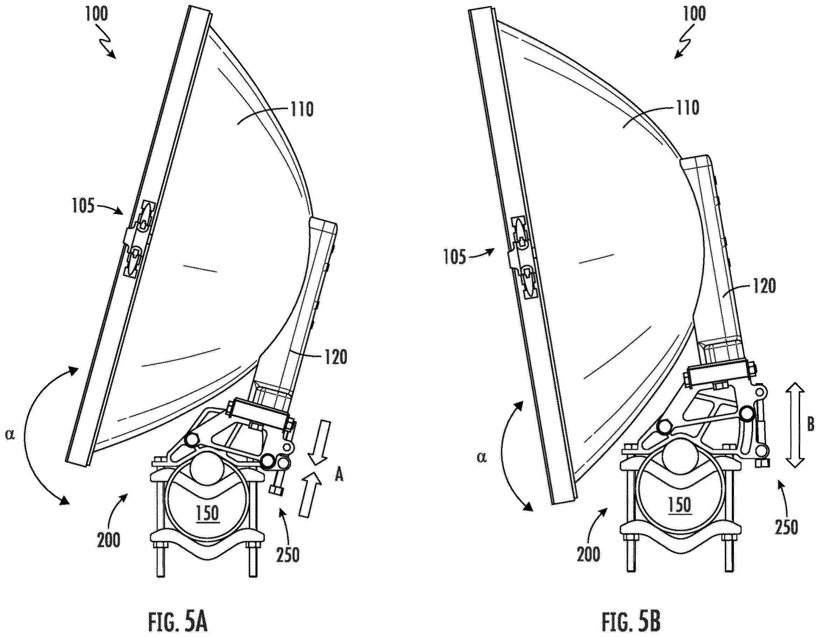

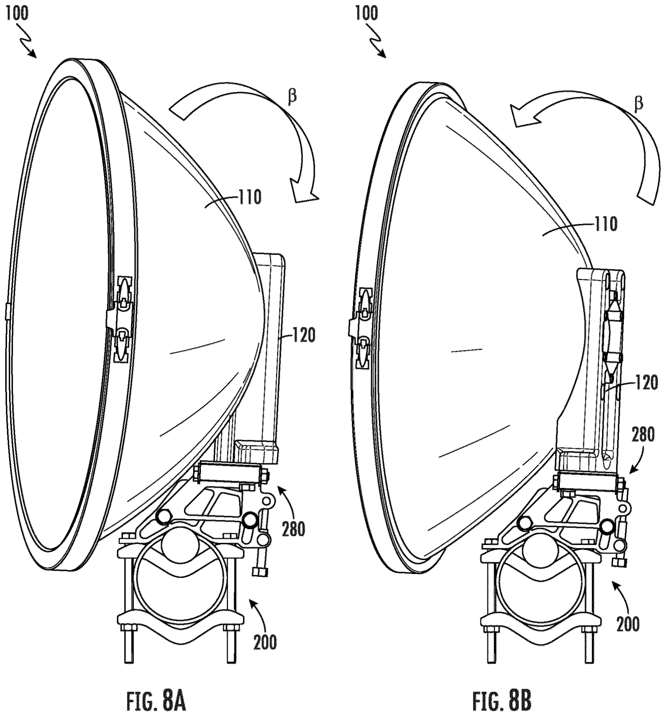

Referring to **FIG. 2****,** **FIG. 3****,** and **FIGS. 4A****-4B,** the antenna mount **200** of the present invention is illustrated in greater detail. According to embodiments of the present invention, the antenna mount **200** is configured to adjust the azimuth alignment of the antenna **105** (and main reflector **110**) coupled thereto (*see, e.g.,* **FIGS. 5A-5B**). In other embodiments, the antenna mount **200** may also be configured to adjust the elevation alignment of the antenna **105** (*see, e.g.,* **FIGS. 8A-8B**). The antenna mount of the present invention may be compatible for use with currently available products (*e.g*., antennas **105,** reflector mounts **120,** etc.). In some embodiments, the antenna mount **200** of the present invention allows for two-axis movement as well as finer resolution control than currently available mounts (*i.e.,* with respect to azimuth and elevation adjustments).

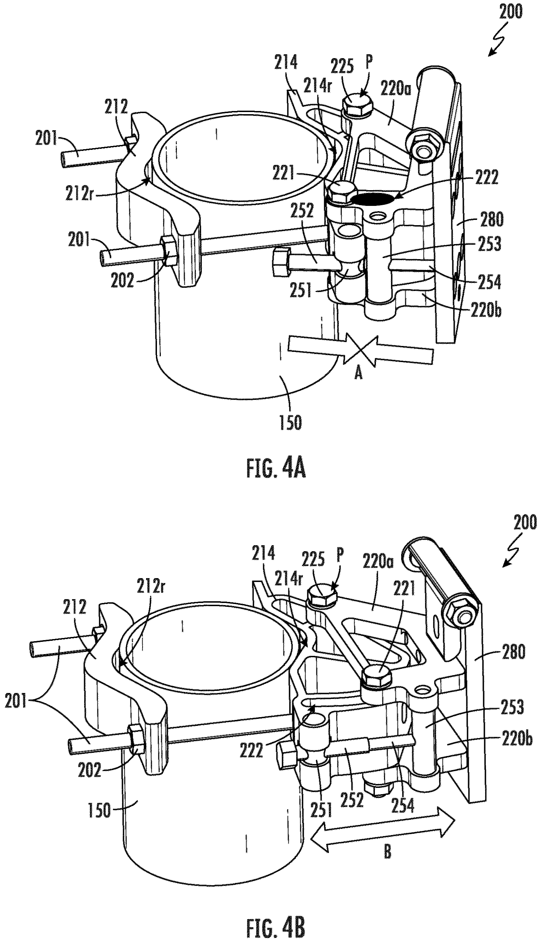

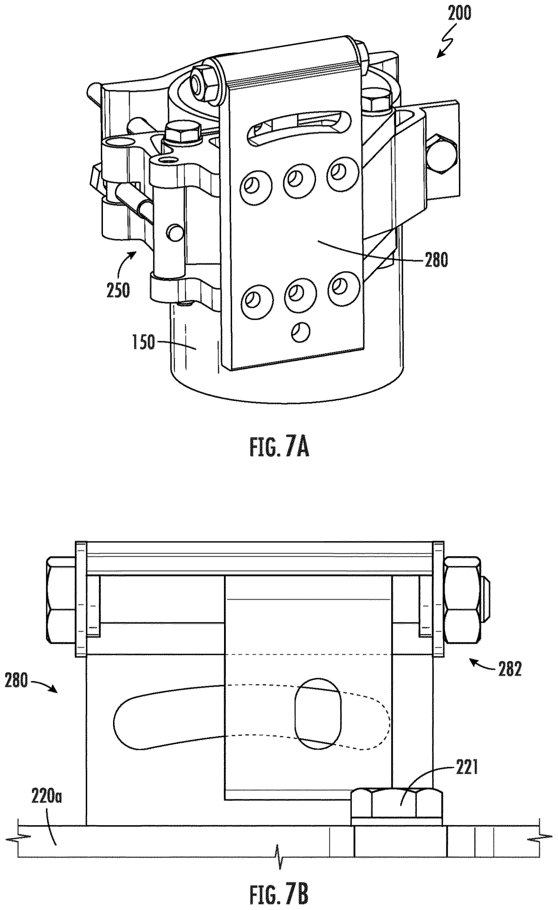

As shown in **FIGS. 2-4B****,** in some embodiments, the antenna mount **200** includes a clamp section **210,** one or more adjustable plates **220,** and an azimuth adjustment mechanism **250.** In some embodiments, the antenna mount **200** includes a pair of adjustable plates **220a, 220b.** In some embodiments, the antenna mount **200** may further include an elevation adjuster **280** which may be coupled to the one or more adjustable plates **220** (*see also, e.g.,* **FIGS. 7A-7B** and **FIGS. 8A-8B**). The clamp section **210** includes one or more clamping members. For example, as shown in **FIG. 2****,** in some embodiments, the clamp section **210** includes a pair of clamping members **212, 214.** The clamping members **212, 214** are configured to engage a mounting structure **150** (*e.g.,* a mounting pole or pipe) therebetween in order to secure the antenna mount **200** to the mounting structure **150** (*see, e.g.,* **FIGS. 4A-4B**). In some embodiments, the clamping members **212, 214** are held together by two threaded bolts or rods **201** extending through apertures **212a, 214** in each of the respective clamping members **212, 214,** which are secured with nuts **202.** Tightening of the bolts or rods **201** enables the clamping members **212, 214** to engage the mounting structure **150,** with the mounting structure **150** being held between recesses **212r, 214r** in the respective clamping members **212, 214** (*see, e.g.,* **FIGS. 4A-4B**). The clamp section **210** may provide better stability for the antenna mount **200,** for example, in windy conditions.

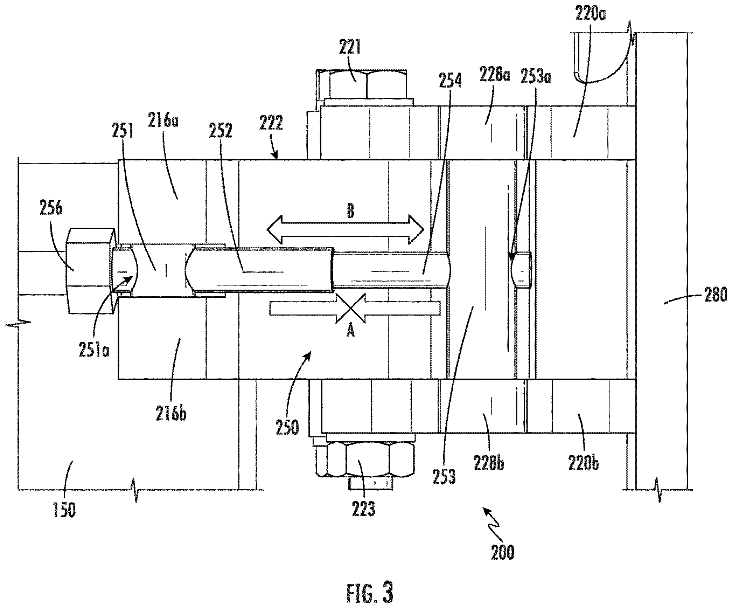

As shown in **FIG. 2** and **FIG. 3****,** in some embodiments, the adjustable plates **220a, 220b** and azimuth adjustment mechanism **250** are coupled to one of the clamping members **214.** In some embodiments the one or more adjustable plates **220a, 220b** are pivotably coupled to the one or more of the clamping members **212, 214.** For example, in some embodiments, the adjustable plates **220a, 220b** are coupled to clamping member **214.** As shown in **FIG. 2****,** in some embodiments, two fasteners **221, 225** *(e.g.,* bolts) secure the adjustable plates **220a, 220b** to a top surface and an opposing bottom surface of the clamping member **214,** respectively. In some embodiments, the first fastener **221** is received through an elongated slot **222** in the clamping member **214** and is configured to traverse within the elongated slot **222.** The second fastener **225** is received through an opposing aperture **213** in the clamping member **214.** The second fastener **225** creates a pivot point **P** which allows the adjustable plates **220** to move relative to the top and bottom surfaces of the clamping member **214.** In some embodiments, the first and second fasteners **221, 225** may be secured with nuts **223** (*see, e.g.,* **FIG. 3**). In some embodiments, the azimuth adjustment mechanism **250** is positioned proximate to the elongated slot **222** in the clamping member **214.** As discussed in further detail below, through rotation of the azimuth adjustment mechanism **250,** the adjustable plates **220a, 220b** are configured to linearly move relative to the top and bottom surfaces of the clamping member **214** (about pivot point **P**). In other words, the adjustable plates **220a, 220b** pivot about the second fastener **225,** as the first fastener **221** slides within the elongated slot **222.**

In most instances, current azimuth adjustment for a point-to-point antenna requires two nuts to be positioned and locked off, and if done in the incorrect order, the antenna **105** (and main reflector **110**) could be misaligned by O.X degrees, for example, misaligned in a range of between about 0.1 degrees to about 1.0 degrees. The azimuth adjustment mechanism **250** of the present invention allows for finer resolution adjustments in azimuth alignment compared to current methods. This is done by providing a pivot point **P** (*i.e.,* fastener **225**) that has tighter tolerances and a threaded pivot (*i.e.,* first and second threaded sections **252, 254** of the azimuth adjustment mechanism **250**). In addition, the azimuth adjustment mechanism **250** of the present invention does not require a lock off. In some embodiments, the azimuth adjustment mechanism **250** has a larger offset from the pivot point **P** than mounts that are currently available in the market.

Further details of the azimuth adjustment mechanism **250** of the antenna mount **200** of the present invention are illustrated in **FIG. 3****.** As shown in **FIG. 3****,** in some embodiments, the azimuth adjustment mechanism **250** comprises a first threaded section **252** coupled to a second threaded section **254.** In some embodiments, the first threaded section **252** comprises a right-hand thread and the second threaded section **254** comprises a left-hand thread, or vice versa. In some embodiments, the first threaded section **252** is an M10 right-hand threaded bolt and the second threaded section **254** is machined to M8 left-hand threaded bolt. In some embodiments, the first threaded section **252** may comprise a bolt head **256** (*e.g.,* a hex bolt head). In other embodiments, the second threaded section **254** may comprise the bolt head **256.** In some embodiments, the bolt head **256** may be attached to one or both ends of the threaded sections **252, 254** by a joining process. In some embodiments, the bolt head **256** resides between the first and second threaded sections **252, 254.** The different thread sizes for the threaded sections **252, 254** allows assembly of the azimuth adjustment mechanism **250** to include the bolt head **256** at either end of the mechanism **250** without having to use any special manufacturing processes; however, in some embodiments threaded sections **252, 254** of similar diameter may be employed.

As further shown in **FIG. 3****,** in some embodiments, the azimuth adjustment mechanism **250** further includes a first boss member **251** and a second boss member **253.** In some embodiments, the first boss member **251** is coupled to the clamping member **214.** In some embodiments, the first boss member **251** is secured between two flanged edges **216a, 216b** of the clamping member **214** (*see also, e.g.,* **FIG. 2**). In some embodiments, the second boss member **253** is coupled to the adjustable plates **220a, 220b.** In some embodiments, the second boss member **253** is secured between respective flanged edges **228a, 228b** of the adjustable plates **220a, 220b,** thereby coupling the adjustable plates **220a, 220b** together such that both adjustable plates **220a, 220b** move together relative to the clamping member **214.**

As shown in **FIG. 3****,** in some embodiments, the first threaded section **252** extends through an aperture **251a** in the first boss member **251** and the second threaded section **254** extends through an aperture **253a** in the second boss member **253.** The azimuth adjustment mechanism **250** is configured such that, as the first threaded section **252** (or second threaded section **254**) is rotated (*i.e*., clockwise or counterclockwise), the first and second boss members **251, 253** move toward *(i.e.,* pulled) each other or away from *(i.e.,* pushed) each other (*see also, e.g.,* **FIGS. 4A-4B**).

Referring to **FIGS. 4A-4B** and **FIGS. 5A-5B****,** adjustment of the azimuth alignment for the antenna assembly **100** utilizing the antenna mount **200** described herein is illustrated. As shown in **FIG. 4A** and **FIG. 5A****,** in some embodiments, as the azimuth adjustment mechanism **250** is rotated clockwise (indicated by arrows labeled "**A**"), the first and second boss members **251** are pulled toward each other. As the first and second boss members **251, 253** are pulled toward each other, the adjustable plates **220a, 220b** coupled to the second boss member **253** pivot relative to the clamping member **214** about the second fastener **225** (pivot point **P**) as the first fastener **221** traverses in a first direction within the elongated slot **222** of the clamping member **214,** thereby adjusting an azimuth angle **α** for the main reflector **110** in a first direction (*see, e.g.,* **FIG. 5A**). As shown in **FIG. 4B** and **FIG. 5B****,** in some embodiments, as the azimuth adjustment mechanism **250** is rotated counterclockwise (indicated by arrows labeled "**B**"), the first and second boss members **251, 253** are pushed away from each other.

Similarly, as the first and second boss members **251, 253** are pushed away from each other, the adjustable plates **220a, 220b** coupled to the second boss member **253** pivot relative to the clamping member **214** about the second fastener **225** (pivot point **P**) as the first fastener **221** traverses in a second opposing direction within the elongated slot **222** of the clamping member **214,** thereby adjusting an azimuth angle **α** for the main reflector **110** in a second opposing direction *(see, e.g.,* **FIG. 5A**). In some embodiments, the antenna mount **200** is configured to adjust the azimuth angle **α** for the main reflector **110** in a range of between about +12.5 degrees and about -12.5 degrees.

It is noted that in other embodiments, that the antenna mount **200** may be configured such that rotation of the azimuth adjustment mechanism **250** in a clockwise direction pushes the first and second boss members **251, 253** away from each other and rotation in a counterclockwise direction pulls the first and second boss members **251, 253** toward each other.

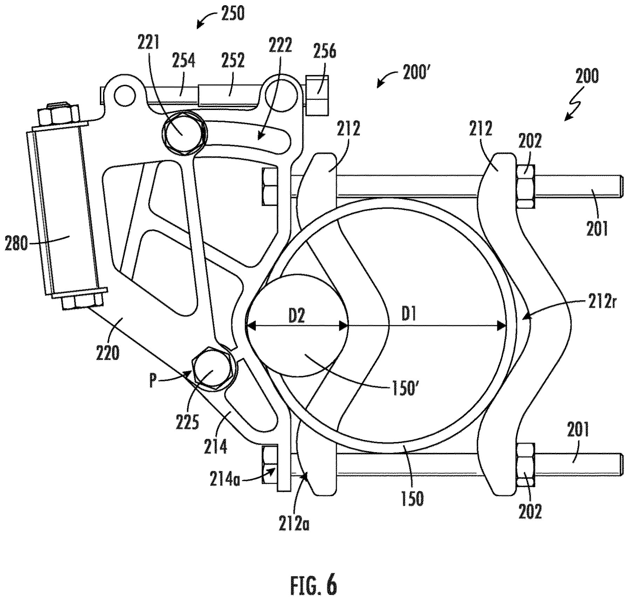

As illustrated in **FIG. 6****,** in some embodiments, the antenna mount **200** of the present invention may be capable of being secured to mounting structures **150, 150'** having different diameters **D1, D2.** For example, as shown in **FIG. 6****,** in some embodiments, the antenna mount **200** is capable of being secured to a mounting structure **150** having a diameter **D1** or a mounting structure **150'** having a smaller diameter **D2.** In some embodiments, the antenna mount **200** is configured to be secured to mounting structures **150, 150'** having diameters **D1, D2** in a range of between about 48 millimeters and about 120 millimeters. In some embodiments, the recesses **212r, 214r** of the clamping members **212, 214** of the antenna mount **200** may comprise a plurality of protrusions (*e.g.*, teeth) (not shown) that are configured to help increase the grip of the clamping members **212, 214** on the mounting structure **150, 150'.**

As noted above, in some embodiments, the antenna mount **200** of the present invention may further include an elevation adjuster **280** coupled to the adjustable plates **220a, 220b.** An exemplary elevation adjuster **280** is further illustrated in **FIGS. 7A-7B** and **FIGS. 8A-8B****.** In some embodiments, the reflector mount **120** is secured to the elevation adjuster **280.** As shown in **FIGS. 7A-7B** and **FIGS. 8A-8B****,** the elevation adjuster **280** is configured to pivot the reflector mount **120** (and main reflector **110**) coupled thereto to a desired angle of elevation **β** for the main reflector **110** relative to the antenna mount **200.**

The foregoing is illustrative of the present invention and is not to be construed as limiting thereof. Although exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as defined in the claims. The invention is defined by the following claims, with equivalents of the claims to be included therein.

## Claims

1. An antenna mount, the antenna mount comprising:
a clamp section comprising one or more clamping members, the one or more clamping members configured to engage a mounting structure;
at least one adjustable plate pivotably coupled to at least one clamping member of the one or more clamping members; and
an azimuth adjustment mechanism coupled to the one or more the clamping members and the at least one adjustable plate,
wherein, through rotation of the azimuth adjustment mechanism, the at least one adjustable plate is configured to linearly move relative to the one or more clamping members to adjust an azimuth alignment of an antenna coupled thereto.

2. The antenna mount according to Claim 1, wherein the antenna mount comprises a pair of adjustable plates and the clamp section comprises a pair of clamping members, and wherein the pair of clamping members are held together by two threaded bolts extending through apertures in each of the respective clamping members and secured with nuts, and wherein tightening of the bolts enables the clamping members to engage a mounting structure with the mounting structure held between recesses in the respective clamping members.

3. The antenna mount according to either Claim 1 or Claim 2, wherein the pair of adjustable plates are secured to a top surface and an opposing bottom surface of the clamping member via a first fastener extending through an elongated slot and a second fastener extending through an aperture, wherein the first fastener is configured to traverse within the elongated slot and the second fastener creates a pivot point, thereby allowing the adjustable plates to move relative to the top and bottom surfaces of the clamping member.

4. The antenna mount according to any one of Claims 1 to 3, wherein the azimuth adjustment mechanism comprises a first threaded section coupled to a second threaded section, the first threaded section having a right-hand thread and the second threaded section having a left hand thread.

5. The antenna mount according to Claim 4, wherein the azimuth adjustment mechanism further comprises a first boss member coupled to the clamping member and a second boss member coupled to the pair of adjustable plates, wherein the first threaded section extends through an aperture in the first boss member and the second threaded section extends through an aperture in the second boss member, wherein the azimuth adjustment mechanism is configured such that as the first or second threaded section is rotated, the first and second boss members move toward each other or away from each other.

6. The antenna mount according to Claim 5, wherein the first boss member is secured between two flanged edges of the clamping member and the second boss member is secured between respective flanged edges of the adjustable plates.

7. The antenna mount according to either Claim 5 or Claim 6, wherein:
when the azimuth adjustment mechanism is rotated clockwise, the first and second boss members are pulled toward each other which causes the adjustable plates coupled to the second boss member to pivot relative to the clamping member about the second fastener as the first fastener traverses in a first direction within the elongated slot of the clamping member, and
when the azimuth adjustment mechanism is rotated counterclockwise, the first and second boss members are pushed asway from each other which causes the adjustable plates coupled to the second boss member to pivot relative to the clamping member about the second fastener as the first fastener traverses in a second opposite direction within the elongated slot of the clamping member,
thereby adjusting the azimuth alignment for the antenna.

8. The antenna mount according to any one of Claims 1 to 7, wherein the antenna mount is configured to adjust the azimuth angle of the antenna in a range of between about +12.5 degrees and about -12.5 degrees.

9. The antenna mount according to any one of Claims 1 to 8, further comprising an elevation adjuster configured to adjust the elevation alignment of an antenna secured to the antenna mount.
